# EUROPEAN PATENT SPECIFICATION

(11) **EP 3 740 386 B1**
(45) Date of publication and mention of the grant of the patent: **12.04.2023**
(21) Application number: 19703888.8
(22) Date of filing: 17.01.2019
(51) Int. Cl.: B60C 23/00

(54) **SYSTEM FOR TRANSMITTING CONTROL PRESSURES AND/OR WORKING PRESSURES**
SYSTEM ZUR ÜBERTRAGUNG VON STEUERDRÜCKEN UND/ODER ARBEITSDRÜCKEN
SYSTÈME POUR TRANSMETTRE DES PRESSIONS DE COMMANDE ET/OU DES PRESSIONS DE TRAVAIL

(30) Priority: 17.01.2018 DE 102018100955
(43) Date of publication of application: 25.11.2020
(73) Proprietor: Illinois Tool Works INC., Glenview, IL 60025 (US); KT Projektentwicklungs GmbH, 74072 Heilbronn (DE)
(72) Inventor: TRITSCHLER, Eva, Glenview, IL 60025 (US); SCHWARZ, Christiane, Glenview, IL 60025 (US); BRAUN, Roland, Glenview, IL 60025 (US); KLEMM, Henry, Glenview, IL 60025 (US); SPINDLER, Martin, Glenview, IL 60025 (US); SCHULZE SELTING, Bruno, Glenview, IL 60025 (US)
(74) Representative: Trinks, Ole
(86) International application number: PCT/US2019/014007
(87) International publication number: WO 2019/143814

(56) References cited:
- DE-A1-102014 001 373
- DE-A1-102014 219 983

## Description

The present invention relates to a system for transmitting control pressures and/or working pressures particularly in a wheel unit with a rotatably supported vehicle tire. According to exemplary embodiments of the invention, this particularly relates to a system for transmitting control pressures and/or working pressures from a compressed air rotary union or a wheel hub of a wheel unit to a vehicle rim mounted on the wheel hub or to a vehicle wheel mounted on the wheel hub.

The invention also relates to a wheel unit with such a system for transmitting control pressures and/or working pressures and to a distributed system for supplying pressure medium, which has a plurality of wheel units, each with a corresponding system for transmitting control pressures and/or working pressures.

The document DE 10 2014 001 373 A1 relates to a vehicle axle assembly having a hub which is mounted on a cylindrical axle body by way of a ball bearing so as to be rotatable about a central longitudinal axis, wherein the ball bearing has an inner race connected to the axle body and has an outer race connected to the hub. The vehicle axle assembly includes an axially inner shaft sealing ring and an axially outer shaft sealing ring which are sealingly arranged between the two races and which delimit a ring-shaped chamber between the two races a first pressure medium line which extends through the inner race or one of the two shaft sealing rings and which opens into the ring-shaped chamber; and a second pressure medium line which extends from the ring-shaped chamber through the outer race and which is configured to be connected to a wheel fastened on the hub.

The document DE 10 2014 219 983 A1 relates to a method for tire inflation pressure control of a vehicle, comprising the following steps: providing a compressed air supply from the vehicle to a tire of the vehicle, the tire being inflatable with the air pressure of the compressed air supply, measuring an actual pressure in the tire with a sensor in the rotating part of the vehicle, in particular, in the wheel bearing, wheel or tire, wireless transmission of the measured actual pressure to a control unit in the non-rotating part of the vehicle, and actuation of a control valve in the compressed air guide as a function of the transmitted actual pressure, into a first switching position for filling the tire and into a second switching position for releasing the compressed air from the tire.

Vehicle tires are usually filled with compressed air. It is also conceivable to fill them with other pressurized mediums such as nitrogen. For purposes of the present disclosure, vehicle tires can, for example, be tube-type tires or tubeless tires. Vehicle tires are used, for example, in passenger cars, busses, and commercial vehicles, but also for example in aircraft.

Conventional vehicle tires are usually supplied with a pressure medium - i.e. compressed air or a nitrogen filling - by means of external connections. Usually, standardized valves are used for this. Vehicle tires usually have an optimum operating pressure or inflation pressure, which depends on the respective usage conditions or operating conditions. Thus for land vehicles such as passenger cars, busses, and commercial vehicles, there are operating pressures or pressure ranges that can insure an optimum of rolling resistance, lateral guidance, longitudinal guidance, heat build-up, and/or wear behavior.

An existing actual pressure in a tire can, within certain limits, fluctuate for example with the ambient temperature or operating temperature. Furthermore, over the long term, a certain pressure loss, for example a so-called gradual pressure loss, often cannot be entirely avoided. There are known systems for vehicles that make it possible to monitor the operating pressure or inflation pressure in tires. These can be so-called active or passive systems. Passive systems can be set up, for example, to determine the rolling circumferences of the tires of an axle and compare them to one another. If this reveals significant differences, then this is an indication that there are differences in the pressures in the respective tires. Active systems for compressed air measurement and/or compressed air monitoring usually include pressure measuring sensors that are integrated into a wheel unit. Pressure sensors of this kind can be equipped, for example, to transmit corresponding pressure signals wirelessly or by wire from the (rotating) tire to stationary components of the vehicle.

Basically, other systems have also become known that permit an autonomous adjustment of the inflation pressure of vehicle tires. Such systems can be found, for example, in off-road vehicles, military vehicles, or similar special-purpose vehicles. The systems can basically be designed to permit adjustment of the inflation pressure while the vehicle is at rest, i.e. when the vehicle is not moving.

Known systems for autonomous pressure regulation in vehicles have a central structure. In other words, there is only one device for supplying the pressure medium for inflating the tires. It is also conceivable to provide a few devices for supplying the pressure medium, for example in a combination of a tractor and a trailer or semitrailer. Such a central supply device for compressed air must nevertheless be provided in order to inflate a plurality of wheel units, in particular for different axles. For this purpose, the central supply unit for compressed air or pressure medium must be coupled to a plurality of wheel units. In other words, the supply unit is usually mounted on the frame, body, or coachwork of the vehicle. The supply unit can, for example, include a compressor or air compressor. It is then necessary to route a plurality of or multiple compressed air lines or pressure medium lines from the supply unit to the individual wheel units. This usually requires provision of a plurality of so-called rotary unions for the pressure medium lines. This is dictated by the fact that the tires of the wheel units are usually mounted in rotary fashion on the axles of the vehicle.

Basically, the transmission of corresponding control pressures and/or working pressures from the wheel hub to a vehicle rim mounted on the wheel hub or to a vehicle wheel mounted on the wheel hub is relatively costly and complex because a wheel unit and its suspension are usually comprised of the wheel bearing, the wheel hub with the wheel-mounting flange, a brake disc with the brake-disc chamber, and the vehicle rim with the tire. The vehicle rim is mounted to the wheel-mounting flange with wheel lug bolts, with the brake disc being clamped between the vehicle rim and the wheel-mounting flange by means of the brake-disc chamber. Such a wheel bearing assembly is known, for example, from the reference DE 101 32 429 A1.

The problem when transmitting control pressures and/or working pressures from the wheel hub to a vehicle rim that is mounted on the wheel hub lies particularly in the fact that - regardless of whether the pressure medium is supplied centrally or in a decentralized way - as a rule, control pressures and/or working pressures must be conveyed through the brake-disc chamber between the vehicle rim and the wheel-mounting flange.

Consequently, the object of the invention, among other things, is to disclose a system for transmitting control pressures and/or working pressures from a compressed air union or wheel hub to a vehicle rim mounted on the wheel hub or to a vehicle wheel mounted on the wheel hub; with this system, the pressure transmission can be implemented without structural changes - or at least without significant ones - to the brake-disc chamber or brake disc.

The object underlying the invention is attained according to the invention by the subject of the independent claim 1; advantageous modifications of the transmission system are disclosed in the dependent claims.

The solution according to the invention, therefore, relates in particular to a system for transmitting control pressures and/or working pressures from a wheel-hub pressure medium supply, for example a pressure medium rotary union in or on a wheel hub, to a vehicle rim mounted on the wheel hub or to a vehicle wheel mounted on the wheel hub. The system has a receiving part, which is embodied, when in use, to be positioned around the wheel hub and/or the brake-disc chamber or alternatively to this, to be permanently connected to the wheel hub and/or the brake-disc chamber.

According to exemplary embodiments of the solution according to the invention, the receiving part has a preferably rotationally symmetrical central region with an opening. In addition, the receiving part has at least one extension region projecting radially, at least in some regions, from the central region. By way of this at least one extension region projecting radially from the central region, the receiving part can be connected to the wheel hub, preferably in a detachable way. In addition, control pressures and/or working pressures can be transmitted from a wheel-hub pressure medium supply - such as a compressed air rotary union or the like - to the opening in the central region.
In this context, it is suitable if the at least one extension region projecting radially from the central region is embodied to engage in the fastening bores for the vehicle rim that are usually provided in the brake-disc chamber and thus for it to have the ability to be connected to the wheel hub.

According to preferred embodiments of the solution according to the invention, the opening of the central region is embodied, at least some regions, to receive a rim insert arranged in the central bore of a vehicle rim.

In this connection, it is particularly conceivable for the system according to the invention not only to have the above-mentioned receiving part with the central region and the at least one extension region, but also to have a wheel/rim insert, which can be accommodated, at least in some regions, by the opening of the central region. Preferably, the wheel/rim insert has a configuration that is adapted to the central bore of a vehicle rim in such a way that the wheel/rim insert can be accommodated, at least in some regions, in the central bore of the vehicle rim.

In order to achieve the fact that a vehicle rim or a vehicle wheel can be mounted to the system according to the invention in any position, in particular regardless of the actual embodiment of the wheel-hub pressure medium supply or of a compressed air rotary union, according to advantageous implementations of the system according to the invention, the opening of the central region and the wheel/rim insert that is accommodated, at least in some regions, by the opening together form a rotary union for transmitting control pressures and/or working pressures from the wheel-hub pressure medium supply to the rim insert that is accommodated, at least in some regions, by the opening.

The term "rotary union" used herein is understood to be a connection that makes it possible for control pressures and/or working pressures to be transmitted regardless of a rotational position of the wheel/rim insert relative to the opening.

In this connection, it is particularly conceivable, in order to embody the rotary union, for the wheel/rim insert, at least in some regions, to be rotationally symmetrical and in particular circular-cylindrical or frustoconical and for it to have an outer circumferential surface; in the outer circumferential surface, at least one annular groove, preferably running all the way around, is formed, which is embodied in such a way that when the wheel/rim insert is accommodated, at least in some regions, by the opening of the central region, control pressures and/or working pressures can be transmitted from the wheel-hub pressure medium supply to the at least one annular groove by way of the at least one radially projecting extension region.

Alternatively or in addition to this, it is conceivable for the opening, at least in some regions, to be rotationally symmetrical and in particular circular-cylindrical and/or frustoconical and for it to have an inner circumferential surface and in the inner circumferential surface, at least one annular region, preferably running all the way around, for an annular groove to be formed, which is embodied in such a way that control pressures and/or working pressures can be transmitted from the wheel-hub pressure medium supply to the annular groove by way of the at least one radially projecting extension region.

According to embodiments of the system according to the invention, the wheel/rim insert has at least one pressure sensor that is in or can be brought into fluid connection with a tire mounted on the vehicle rim. Alternatively or in addition to this, it is conceivable for the wheel/rim insert to have at least one pressure-controlled outlet valve, which on the one hand is in or can be brought into fluid connection with a tire mounted on the vehicle rim and on the other hand is in or can be brought into fluid connection with the wheel-hub pressure medium supply by way of the at least one annular region. It is also conceivable for the wheel/rim insert to have at least one refill valve that is in or can be brought into fluid connection with a tire mounted on the vehicle rim. Naturally other functions can be implemented in the wheel/rim insert.

With regard to the at least one radially projecting extension region, it is advantageous if in this extension region, a pressure medium channel is formed, having a first end region, which is in fluid connection with a pressure medium connection of the extension region, and a second end region, which opens out into the at least one annular groove. The pressure medium connection of the at least one extension region can, for example, be embodied as a plug-in connection and is designed to have the ability to be accommodated in a connection that is correspondingly embodied to be complementary to it and this connection, preferably extends through a brake-disc chamber that is positioned, at least in some regions, between the wheel hub and the vehicle rim and opens out into a line system that is in or can be brought into fluid connection with the wheel-hub pressure medium supply. In this context, it is conceivable, for example, for the connection for accommodating the pressure medium connection of the at least one extension region to be embodied in or by means of a fastening bore of the brake-disc chamber for the vehicle rim.

In an advantageous way, the system according to the invention is designed as a component of a tire pressure control system and is embodied to transmit separate control pressures and/or working pressures from the wheel-hub pressure medium supply to the vehicle rim or vehicle wheel. In particular, the system is embodied to detect a tire pressure and/or a tire temperature and to transmit the detected value or detected values to a corresponding control unit. It is also advantageous if the system is embodied to inflate or deflate, as needed, a tire that is mounted on the vehicle rim or the vehicle wheel.

According to an exemplary embodiment of the receiving part, this part has multiple extension regions, which project radially from the central region, these extension regions being positioned equidistantly from one another. In particular, the placement of the extension regions is structurally adapted to a bolt circle of the vehicle rim or to a bolt circle (fastening bores) of the brake-disc chamber.

According to a modification of this embodiment, the receiving part is embodied as a module and can be accommodated in a flush manner in the region of a center hole (central bore) of the vehicle rim and the wheel/rim insert can be inserted into the center hole (central bore) of the vehicle rim.

According to another exemplary embodiment, the wheel/rim insert has an external refill valve that is in or can be brought into fluid connection with at least one annular groove between the central region and the wheel/rim insert.

According to another exemplary embodiment, the vehicle rim is associated with a pressure medium path, which, at least in some regions, is advantageously embodied as an integral component of the rim, in particular as a channel in an arm of the rim. For example, the pressure medium path, at least in some regions, extends radially along an arm of the rim and in the region of a shoulder or a bed of the rim, a seat for an internal filling valve adjoins the pressure medium path. According to exemplary embodiments, the wheel/rim insert has a pressure sensor and the pressure sensor can be connected via a signal line to a control unit of a pressure medium supply device in order to transmit a pressure signal to the pressure medium supply device. The pressure sensor can be embodied as a combined pressure/temperature sensor.

The disclosure also relates to a pressure medium supply system for a vehicle, in particular a multitrack vehicle, with at least two vehicle wheels that are each provided with a system for transmitting control pressures and/or working pressures.

It goes without saying that the features mentioned above and those that have yet to be explained below can be used not only in the respectively indicated combination, but also in other combinations or by themselves without going beyond the scope of the present invention.

Other features and advantages of the invention ensue from the following description of an exemplary embodiment with reference to the accompanying drawings.

### In the drawings:

- FIG. 1: is a schematic, very simplified top view of a vehicle that is equipped with a central pressure medium supply system;
- FIG. 2: is a schematic, isometric view of an exemplary embodiment of the system according to the invention for transmitting control pressures and/or working pressures, having a wheel/rim insert, which, at least in some regions, is accommodated in an opening of a central region of a receiving part of the system.
- FIG. 3: is a schematic, isometric view of the exemplary embodiment of the system according to the invention from FIG. 2, in a partially exploded view.
- FIG. 4: is a schematic, longitudinal section through a wheel unit with the exemplary embodiment of the transmission system according to the invention shown in FIG. 2 in the assembled state;
- FIG. 5: is a schematic, longitudinal section through a region of the wheel unit according to FIG. 4; and
- FIG. 6: is a schematic detailed view from FIG. 5.

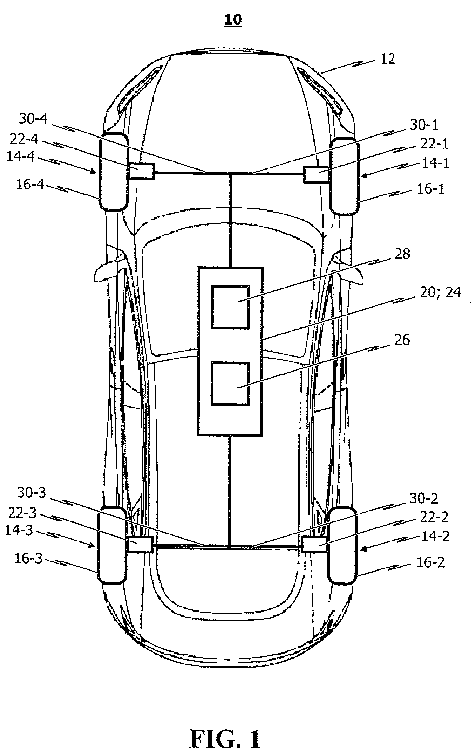

FIG. 1 is a schematic, very simplified top view of a vehicle 10, which is depicted by way of example as a passenger car. Naturally, the vehicle 10 can alternatively also be embodied as a commercial vehicle and in general, as a land vehicle. The present disclosure is not limited to land vehicles. For example, it is conceivable for it to be used in aircraft (airplanes) that have landing gear.
A chassis or body of the vehicle 10 is labeled with the reference numeral 12.

The vehicle 10 has multiple axles 14-1, 14-2, which are offset from each other in a longitudinal direction of the vehicle. The vehicle 10 shown in FIG. 1 is a two-axle vehicle. Naturally, the scope of the disclosure extends to multi-axle vehicles (trucks that are embodied with three or four axles), but it also includes single-axle vehicles (such as trailers, semitrailers, or the like).

It goes without saying that the vehicle 10 can generally be embodied as a driven vehicle. But the vehicle 10 can also be a vehicle that is pushed or pulled, in particular a trailer, semitrailer, or the like. The vehicle 10 shown in FIG. 1 is embodied as a multitrack vehicle, in particular a two-track vehicle. The present disclosure, however, can also relate to single-track vehicles (motorcycles, mopeds, or the like).

The vehicle 10 has four vehicle wheels 16, with two being associated with each of the axles 14-1, 14-2. The vehicle wheels are labeled in clockwise sequence with the reference numerals 16-1, 16-2, 16-3, and 16-4.

The vehicle 10 has an integrated (on-board) pressure medium supply system 20. The pressure medium supply system 20 is only depicted schematically in FIG. 1 by means of a block diagram. The pressure medium supply system 20 includes multiple distributed (outlying) pressure medium supply devices 22. In particular, each vehicle wheel 16 (or each pair of wheels) is associated with a pressure medium supply device 22. The first wheel 16-1 is associated with a first pressure medium supply device 22-1. The second wheel 16-2 is associated with a second pressure medium supply device 22-2. The third wheel 16-3 is associated with a third pressure medium supply device 22-3. The fourth wheel 16-4 is associated with a fourth pressure medium supply device 22-4.

According to one aspect of the present disclosure, the production of pressure in the pressure medium supply system 20 takes place in either a decentralized or centralized way.

The vehicle wheels 16 usually have tires that can be filled with a pressure medium. Normally, tires are filled with air. It is also conceivable, though, to fill the tires with nitrogen or the like. With the decentralized pressure production of the pressure medium supply system 20, in order to check, regulate, and adjust the level of pressure medium in the tires of the vehicle wheels 16, each of the pressure medium supply devices 22 is provided with its own unit for supplying the pressure medium. It would also be conceivable, though, to provide a central pressure medium supply in which a central compressor or compressed air reservoir is required. This would require corresponding pressure medium rotary unions for a transmission from the chassis 12 to the vehicle wheels 16.

In any case, the pressure medium supply system 20 can be indirectly or directly coupled to the pressure medium supply devices 22. This can also take place primarily for purposes of transmitting electrical energy, for exchanging data, and for control purposes.

For example, the pressure medium supply system 20 includes a control unit 24, which includes a signal processing unit 26 and an energy storage unit 28 or is coupled thereto. The control unit 24 can, for example, be coupled to a main energy storage unit (main battery) of the vehicle 10. Alternatively, it is conceivable for separate energy storage units 28 to be provided in the control unit 24 and for them to be coupled to the control unit 24.

The signal processing unit 26 can be embodied as part of an overarching vehicle control system. Alternatively, the signal processing unit 26 can be embodied as a separate module. The control unit 24 is embodied to monitor a state of the vehicle wheels 16, in particular of their tires, in order to be able to detect a need for pressure medium. This can take place, for example, by means of a direct or indirect tire pressure monitoring in the wheels 16. Consequently, the control unit 24 can be embodied to control one or more pressure medium supply device(s) 22 in order to achieve a desired pressure in the tires of the wheels 16.

Alternatively or in addition, the pressure medium supply devices 22 can also be embodied to autonomously maintain a particular target state or target range with regard to the pressure in the tires of the vehicle wheel 16. In this operating state, no external control commands would be required. Hybrid forms are also conceivable, in which on the one hand, central control signals are generated for the pressure regulation and on the other hand, an at least partially decentralized autonomous regulation is enabled, for example as part of an emergency operation.
According to the example shown in FIG. 1, the control unit 24 is or can be coupled via electrical lines 30 to the pressure medium supply devices 22 associated with the vehicle wheels 16. The lines 30 are embodied as electrical lines. The lines 30 are particularly embodied to transmit energy to the pressure medium supply devices 22. Alternatively or in addition, the lines 30 can also be embodied to transmit data, signals, measurement values, parameters, or the like. It goes without saying that it is also possible for multiple lines 30 to be embodied for purposes of energy transmission and data transmission. According to the depiction in FIG. 1, the control unit 24 is or can be connected via a first line 30-1 to a first pressure medium supply device 22-1, via a second line 30-2 to a second pressure medium supply device 22-2, via a third line 30-3 to a third pressure medium supply device 22-3, and via a fourth line 30-4 to a fourth pressure medium supply device 22-4.

The pressure medium supply system 20 is embodied to perform adjustments to the pressure or air pressure in the tires of the wheels 16 during the operation of the vehicle 10. It is therefore unnecessary to slow down or stop the vehicle 10 in order to perform adjustments to the pressure in the tires. Instead, the pressure medium supply device 22 is embodied to be able to perform adjustments to the pressure even during a relative rotation between the vehicle wheels 16 and the axles 14 of the vehicle.

Preferably, the control unit 24 of the pressure medium supply system 20 is embodied to detect pressure losses and the detection also includes a detection of tire damage. For this purpose, a defined pressure drop over a certain period of time can be used as a threshold indicating the existence of a flat tire or tire damage.

In addition, the pressure medium supply system 20 is embodied to monitor a pressure in the tires of the wheels 16 over the long term. In this way, it is also possible, for example, to detect and compensate for seasonal (temperature-induced) pressure fluctuations and a natural long-term pressure drop in the wheels 16. Another use for the pressure medium supply system 20 can turn out to be a selective adjustment of the pressure in the wheels 16. It is thus possible, for example, to react to different load states, axial loads, road conditions, weather conditions, or the like.

An exemplary embodiment of a system 40 for transmitting control pressures and/or working pressures from a compressed air rotary union 21 or a wheel hub 1 to a vehicle rim 2 mounted on the wheel hub 1 or a vehicle wheel mounted on the wheel hub 1, which system can, for example, be used with the pressure medium supply system 20 according to FIG. 1, will be described in detail below.

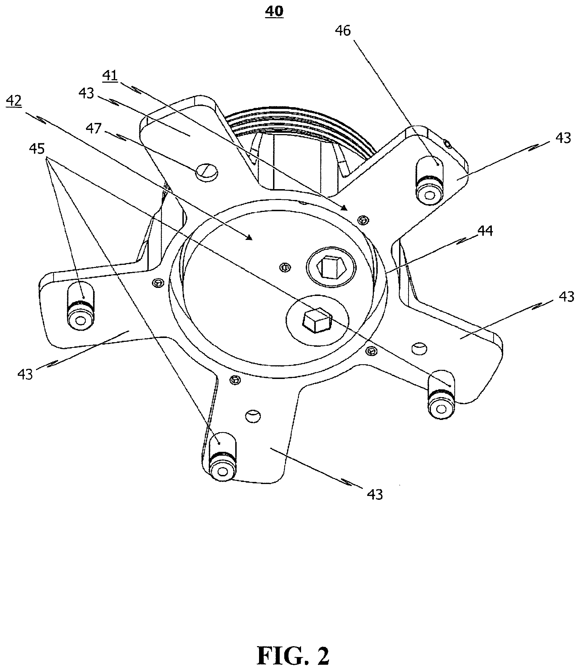

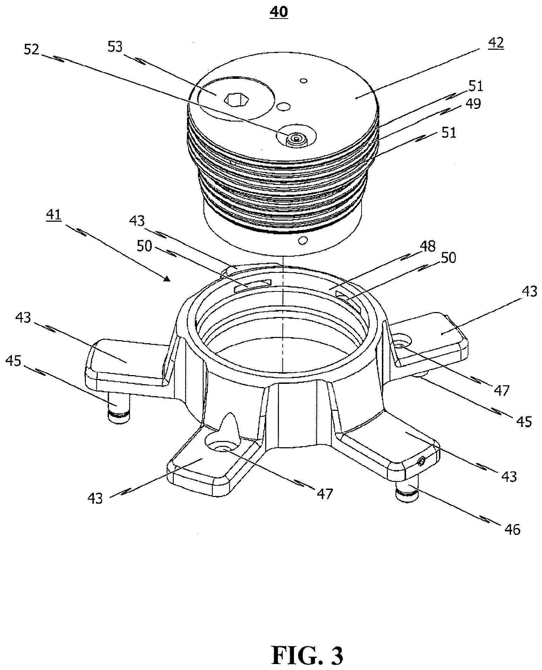

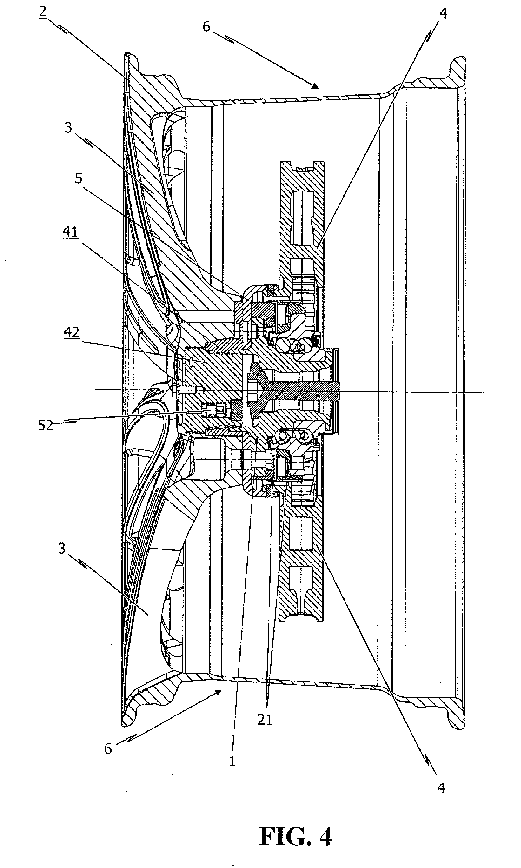

With reference to the depiction in FIGS. 2 and 3 and with further reference to the depictions in FIGS. 4 to 6, a more detailed embodiment of a vehicle wheel is illustrated, which is provided with a system 40 for transmitting control pressures and/or working pressures.

In detail, FIG. 2 and FIG. 3 show an isometric depiction of an exemplary embodiment of the transmission system 40 according to the invention, each in a state in which the transmission system 40 is not connected to a wheel unit.

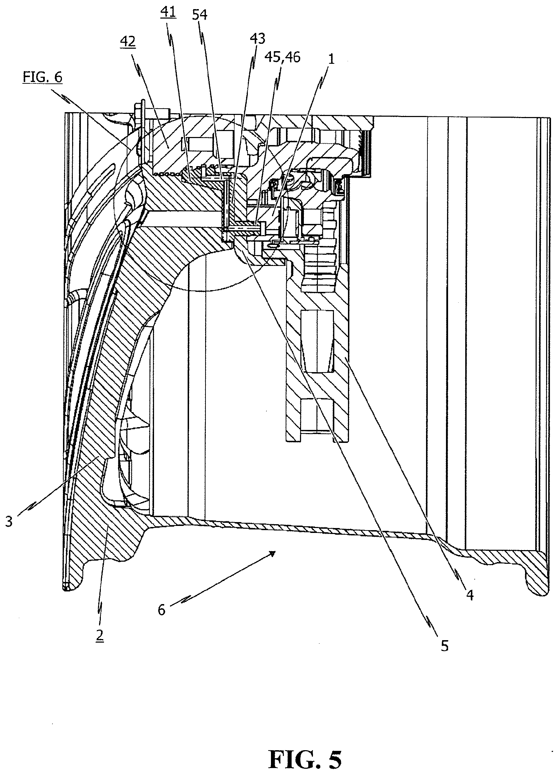

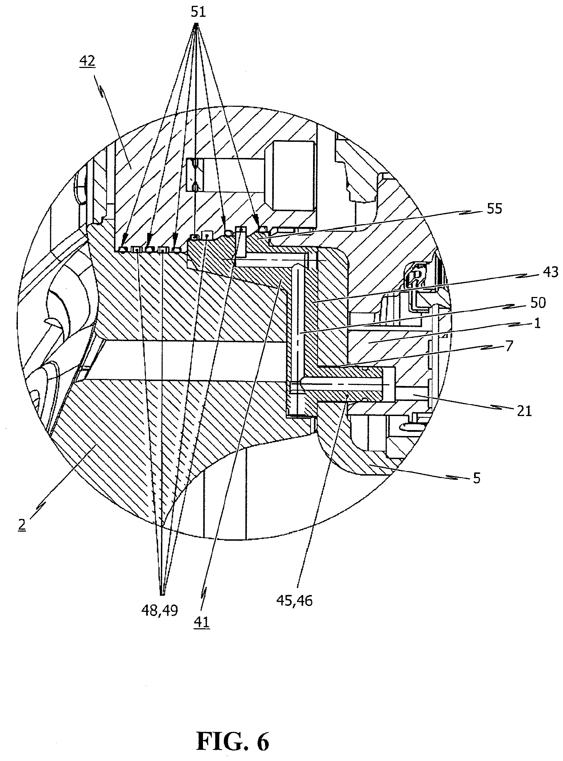

FIG. 4 schematically depicts a sectional view of the exemplary embodiment of the transmission system 40 according to the invention in a state in which this system 40, at least in some regions, is accommodated in a center hole (central bore) in a central region of a vehicle rim 2. FIG. 5 and FIG. 6 show details of this sectional view more closely.

FIG. 4 shows a rim 2 of a motor vehicle wheel that is mounted in rotary fashion by means of a wheel hub 1 via a wheel bearing onto parts, which are not shown in detail, of a wheel suspension according to the prior art. The rim 2 has multiple spokes 3 and in its middle, in a hub region of the wheel, at the outer edge of the wheel hub 1, a control valve, not shown, is positioned in a control valve housing that is connected to the wheel hub 1 in an airtight way. The rim 2, on which a tire that is not shown is mounted, is fastened next to a brake disc 4 by means of wheel lug bolts to the wheel hub 1 that supports the wheel bearing. In at least one spoke 3 of the rim 2, a last segment of a pressure medium supply line extends from a control valve line to a control valve housing and then to an air outlet from the rim 2 into the tire (not shown).

A target filling medium pressure in the tire is produced by means of a device for supplying compressed air, consisting of a compressed air supply line, not shown, from a compressed air source, not shown, that is mounted in the vehicle, through the wheel hub 1 and the rim 2, into the tire; the compressed air supply line contains a pneumatic control valve, not shown, in the control valve housing, which, as a function of a current tire pressure, can be brought into a switch position in the compressed air supply line for inflating the tire with air from the compressed air supply line and can also be brought into a switch position for letting air out of the tire. A check valve that automatically closes in the direction of the compressed air source can be built into the compressed air supply line and it can be prevented from automatically closing by a means for triggering it.

As already explained above, the vehicle rim 2 has, for example, multiple spokes 3, which connect the central region of the vehicle rim 2 to a tire support, which for example has a bed 6 and adjoining shoulders. A tire can be accommodated between the shoulders, facing the bed 6. The bed 6 is embodied as an outer circumferential surface of the rim 2.

As can be inferred from the depiction in FIG. 4, the vehicle rim 2 is detachably connected to a wheel hub 1 and between the wheel hub 1 and the vehicle rim 2, there is a brake-disc chamber 5 for a corresponding brake disc 4. The brake-disc chamber 5 has fastening bores 7 for the vehicle rim 2 and also has a central opening for the wheel hub 1 to extend through. The system 40 according to the invention for transmitting control pressures and/or working pressures is accommodated, at least in some regions, in this central opening of the brake-disc chamber 5, as can be seen from the sectional depiction in FIG. 4.

In detail - and as can be inferred from the isometric depictions in FIG. 2 and FIG. 3 - the system 40 has a receiving part 41, which has a central region 55 with an opening and a total of five extension regions 43 that project radially, at least in some regions, from the central region 55. The receiving part 41 can be connected, preferably in a detachable way, to the wheel hub 1 by means of these radially projecting extension regions 43, or can be connected to the wheel hub 1 by means of the fastening bores 7 of the brake-disc chamber 5.

As is described in greater detail below, by means of at least some of the radially projecting extension regions 43, a transmission of control pressures and/or working pressures takes place from a pressure medium supply - which is embodied, for example, in the form of a pressure medium rotary union 21 - to the opening of the receiving part 41.

In the exemplary embodiment shown in the drawings, the system according to the invention 40 also has a rim insert 42, which is positioned in the central bore of the vehicle rim 2 and at least in some regions, can be accommodated in the opening of the central region 55.

According to the invention, the opening of the central region 55 and the rim insert 42, which, at least in some regions, is accommodated in the opening, together form a rotary union in order to [missing verb] control pressures and/or working pressures from the wheel-hub pressure medium supply, for example the pressure medium rotary union 21, to the rim insert 42 that is accommodated, at least in some regions, by the opening, regardless of a rotational position of the rim insert 42 relative to the opening or to the part 41 of the system 40 that is to be received.

For this purpose - as can be inferred from the exploded view according to FIG. 3 - the opening of the central region 55, at least in some regions, is rotationally symmetrical and in particular circular-cylindrical or frustoconical and has an inner circumferential surface and in the inner circumferential surface, at least one annular groove or annular region 48 is provided, which preferably runs all the way around.

In any case, in the exemplary embodiment shown in the drawings, the rim insert 42, at least in some regions, is rotationally symmetrical and in particular circular-cylindrical or frustoconical and has an outer circumferential surface; in the outer circumferential surface, at least one annular groove (annular region 49) is provided, which preferably runs all the way around. The opening embodied in the inner circumferential surface and the at least one annular groove 48, 49 embodied in the outer circumferential surface of the rim insert 42 are embodied in such a way that in a state in which the rim insert 42 is accommodated, at least in some regions, by the opening of the central region 55, control pressures and/or working pressures can be transmitted from the hub pressure medium supply to the at least one annular groove 48, 49 by way of at least one radially projecting extension region.

Advantageously, corresponding seals 51 are provided in order to seal the at least one annular groove 48, 49.

The corresponding radially projecting extension regions 43 can be provided with corresponding bores 47, which correspond to the fastening bores 7 of the brake-disc chamber 5 for the vehicle rim 2 in order to thus connect the receiving part 41 of the transmission system to the wheel hub 1 or brake-disc chamber 5, preferably in a detachable way.

Furthermore, in at least some of the radially projecting extension regions 43, a respective pressure medium channel 54 is embodied, with a first end region that is in fluid connection with a pressure medium connection (pressure medium connection 45 for working pressure; pressure medium connection 46 for control pressure) of the corresponding extension region 43, and a second end region that opens out into the at least one annular groove 48, 49.

In the embodiment that is shown by way of example in the drawings, the pressure medium connection 45, 46 of the corresponding extension regions 43 is embodied as a plug-in connection and is designed to have the ability to be accommodated in a connection that is correspondingly embodied to be complementary to it and this connection corresponds to a fastening bore 7 in the brake-disc chamber 5. In detail, this connection extends through the brake-disc chamber 5, which is positioned, at least in some regions, between the wheel hub 1 and the vehicle rim 2 and opens out into a line system of the rotary union 21 that is in or can be brought into fluid connection with the wheel-hub pressure medium supply.

The system according to the invention 40 is designed as a component of a tire pressure control system and is embodied to transmit separate control pressures and/or working pressures from the wheel-hub pressure medium supply to the vehicle rim 2. The system 40 is also embodied to detect a tire pressure and/or tire temperature and to transmit the detected value or detected values to a corresponding control unit. The system 40 is also embodied to inflate or deflate, as needed, a tire (not shown in the drawings) that is mounted on the vehicle rim 2.

For this purpose, in the exemplary embodiment shown in the drawings, the rim insert 42 is provided with corresponding sensors 53 (pressure sensors/temperature sensors) and valves 52 (refill valve/pressure-controlled outlet valve).

According to embodiments of the receiving part 41 of the system according to the invention, this receiving part is provided with multiple integrated media lines and multiple annular grooves/annular channels 48, 49.

The receiving part 41 can be placed around the wheel hub 1 and/or the brake-disc chamber 5 or be permanently connected to the wheel hub 1 and/or the brake-disc chamber 5 or can be embodied as a part of these components. In the embodiment shown in the drawings, the receiving part 41 of the system according to the invention 40 has one or more connections respectively for recording or exporting control pressures and working pressures as well as the tire pressure.

The rim insert 42 is supported in the central bore of the vehicle rim 2 and is permanently connected to the vehicle rim 2 or is integrated directly into the rim 2 as a component thereof. Advantageously, the rim insert 42 has integrated annular channels for recording or exporting control pressures, working pressures, and the tire pressure and serving as a connection to other integrated functions.

## Claims

1. A system (40) for transmitting control pressures and/or working pressures from a wheel-hub pressure medium supply (20, 21, 22), in particular from a wheel-hub pressure medium rotary union (21), to a vehicle rim (2) mounted on the wheel hub (1), wherein the system (40) has a receiving part (41), which has a central region (55) with a central opening (44) and at least one extension region (43) projecting radially from the central region (55), at least in some regions, and the receiving part (41) can be connected to the wheel hub (1) by means of the at least one radially projecting extension region (43), preferably in a detachable way;
the system (40) also has a rim insert (42) for recording or exporting the control pressures and/or working pressures, which can be accommodated, at least in some regions, by the opening (44) of the central region (55), and control pressures and/or working pressures can be transmitted from the wheel-hub pressure medium supply (20, 21, 22) via the receiving part (41) to the rim insert (41).

2. The system (40) according to claim 1,
wherein the opening (44) of the central region (55) is embodied, at least some regions, to receive a rim insert (42) arranged in the central bore of a vehicle rim (2).

3. The system (40) according to claim 1 or 2,
wherein the rim insert (42) has a configuration that is adapted to the central bore of a vehicle rim (2) in such a way that the rim insert (42) can be accommodated, at least in some regions, in the central bore of the vehicle rim (2).

4. The system (40) according to one of claims 1 to 3,
wherein the opening (44) of the central region (55) and the rim insert (42) that is accommodated, at least in some regions, by the opening (44) together form a rotary union for transmitting control pressures and/or working pressures from the wheel-hub pressure medium supply (20, 21, 22) to the rim insert (42) that is accommodated, at least in some regions, by the opening (44) regardless of a rotational position of the rim insert (42) relative to the opening (44).

5. The system (40) according to one of claims 1 to 4,
wherein the rim insert (42) is embodied, at least in some regions, in a rotation-ally symmetrical and in particular circular-cylindrical and/or frustoconical manner and has an outer circumferential surface;
in the outer circumferential surface, at least one annular region (49), in particular an annular groove, is formed, which preferably runs all the way around and is embodied in such a way that, in a state when the rim insert (42) is accommodated, at least in some regions, by the opening (44) of the central region (55), control pressures and/or working pressures can be transmitted from the hub pressure medium supply (20, 21, 22) to the at least one annular region (49) by way of the at least one radially projecting extension region (43).

6. The system (40) according to one of claims 1 to 5,
wherein the opening (44), at least in some regions, is rotationally symmetrical and in particular circular-cylindrical and/or frustoconical and has an inner circumferential surface; in the inner circumferential surface, at least one annular region (48), in particular an annular groove, is formed, which preferably runs all the way around and is embodied in such a way that control pressures and/or working pressures can be transmitted from the hub pressure medium supply (20, 21, 22) to the at least one annular region (48) by way of the at least one radially projecting extension region (43).

7. The system (40) according to one of claims 1 to 6,
wherein the rim insert (42) has at least one pressure sensor (53) that is in or can be brought into fluid connection with a tire mounted on the vehicle rim (2); and/or
the rim insert (42) has at least one pressure-controlled outlet valve, which on the one hand is in or can be brought into fluid connection with a tire mounted on the vehicle rim (2) and on the other hand is in or can be brought into fluid connection with the wheel-hub pressure medium supply (20, 21, 22) by way of the at least one annular region (48, 49); and/or
the rim insert (42) has at least one refill valve (52) that is in or can be brought into fluid connection with a tire mounted on the vehicle rim (2).

8. The system (40) according to claim 7,
wherein in the at least one radially projecting extension region (43), a pressure medium channel (54) is formed, with a first end region, which is in fluid connection with a pressure medium connection (45, 46) of the extension region (43), and a second end region, which opens out into the at least one annular region (48, 49).

9. The system (40) according to claim 8,
wherein the pressure medium connection (45, 46) of the at least one extension region (43) is embodied as a plug-in connection and is designed for having the ability to be accommodated in a connection that is correspondingly embodied to be complementary to it and this connection preferably extends through a brake-disc chamber (5) that is positioned, at least in some regions, between the wheel hub (1) and the vehicle rim (2) and opens out into a line system (21) that is in or can be brought into fluid connection with the wheel-hub pressure medium supply (20, 21, 22).

10. The system (40) according to one of claims 1 to 9,
wherein multiple, preferably altogether five, extension regions (43) are pro-vided, projecting radially, at least in some regions, from the central region (55) and in particular positioned equidistantly from one another; the extension regions (43) are embodied for respectively engaging in a fastening bore (7) of a circle of holes provided in a brake-disc chamber (5); and the fastening bores (7) of the circle of holes of the brake-disc chamber (5) are provided for the fastening of the vehicle rim (2).

11. The system (40) according to one of claims 1 to 10,
wherein the wheel-hub pressure medium supply (20, 21, 22) has a decentralized integrated pressure-medium supply device or is in or can be brought into fluid connection with a preferably central pressure-medium supply device by way of a pressure-medium rotary union (21).

12. The system (40) according to one of claims 1 to 11,
wherein the system (40) is designed to be part of a tire pressure control system and is embodied to transmit separate control pressures and/or working pressures from the wheel-hub pressure medium supply (20, 21, 22) to the vehicle rim (2).

13. The system (40) according to one of claims 1 to 12,
which is embodied to detect a tire pressure and/or tire temperature and to transmit the detected value or detected values to a control unit.

14. The system (40) according to one of claims 1 to 13,
which is embodied to inflate or deflate, as needed, a tire that is mounted on the vehicle rim (2).

## Patentansprüche

1. System (40) zur Übertragung von Steuerdrücken und/oder Betriebsdrücken von einer Radnaben-Druckmittelversorgungseinrichtung (20, 21, 22), insbesondere von einer Radnaben-Druckmitteldrehdurchführung (21), auf eine Fahrzeugfelge (2), die an der Radnabe (1) angebracht ist, wobei das System (40) ein Aufnahmeteil (41) aufweist, das einen zentralen Bereich (55) mit einer zentralen Öffnung (44) und zumindest einen Verlängerungsbereich (43), der, zumindest in einigen Bereichen, radial von dem zentralen Bereich (55) vorsteht, aufweist, und das Aufnahmeteil (41) mittels des zumindest einen radial vorstehenden Verlängerungsbereichs (43) mit der Radnabe (1), bevorzugt in einer lösbaren Weise, verbunden werden kann;
wobei das System (40) außerdem einen Felgeneinsatz (42) zum Aufzeichnen oder Exportieren der Steuerdrücke und/oder Betriebsdrücke aufweist, der, zumindest in einigen Bereichen, von der Öffnung (44) des zentralen Bereichs (55) aufgenommen werden kann, und Steuerdrücke und/oder Betriebsdrücke von der Radnaben-Druckmittelversorgungseinrichtung (20, 21, 22) über das Aufnahmeteil (41) auf den Felgeneinsatz (41) übertragen werden können.

2. System (40) nach Anspruch 1,
wobei die Öffnung (44) des zentralen Bereichs (55), zumindest in einigen Bereichen, so ausgeführt ist, dass sie einen Felgeneinsatz (42) aufnimmt, der in der zentralen Bohrung einer Fahrzeugfelge (2) angeordnet ist.

3. System (40) nach Anspruch 1 oder 2,
wobei der Felgeneinsatz (42) eine Konfiguration aufweist, die derart an die zentrale Bohrung einer Fahrzeugfelge (2) angepasst ist, dass der Felgeneinsatz (42), zumindest in einigen Bereichen, in der zentralen Bohrung der Fahrzeugfelge (2) aufgenommen werden kann.

4. System (40) nach einem der Ansprüche 1 bis 3,
wobei die Öffnung (44) des zentralen Bereichs (55) und der Felgeneinsatz (42), der, zumindest in einigen Bereichen, von der Öffnung (44) aufgenommen wird, zusammen eine Drehdurchführung zum Übertragen von Steuerdrücken und/oder Betriebsdrücken von der Radnaben-Druckmittelversorgungseinrichtung (20, 21, 22) auf den Felgeneinsatz (42), der, zumindest in einigen Bereichen, von der Öffnung (44) aufgenommen wird, unabhängig von einer Drehposition des Felgeneinsatzes (42) in Bezug auf die Öffnung (44), bilden.

5. System (40) nach einem der Ansprüche 1 bis 4,
wobei der Felgeneinsatz (42), zumindest in einigen Bereichen, in einer rotationssymmetrischen und insbesondere kreiszylindrischen und/oder kegelstumpfförmigen Weise ausgeführt ist und eine äußere Umfangsfläche aufweist;
wobei in der äußeren Umfangsfläche zumindest ein ringförmiger Bereich (49), insbesondere eine Ringnut, gebildet ist, der bevorzugt rundum verläuft und derart ausgeführt ist, dass, in einem Zustand, in dem der Felgeneinsatz (42), zumindest in einigen Bereichen, von der Öffnung (44) des zentralen Bereichs (55) aufgenommen wird, Steuerdrücke und/oder Betriebsdrücke von der Naben-Druckmittelversorgungseinrichtung (20, 21, 22) mittels des zumindest einen radial vorstehenden Verlängerungsbereichs (43) auf den zumindest einen ringförmigen Bereich (49) übertragen werden können.

6. System (40) nach einem der Ansprüche 1 bis 5,
wobei die Öffnung (44), zumindest in einigen Bereichen, rotationssymmetrisch und insbesondere kreiszylindrisch und/oder kegelstumpfförmig ist und eine innere Umfangsfläche aufweist; wobei in der inneren Umfangsfläche zumindest ein ringförmiger Bereich (48), insbesondere eine Ringnut, gebildet ist, der bevorzugt rundum verläuft und derart ausgeführt ist, dass Steuerdrücke und/oder Betriebsdrücke von der Naben-Druckmittelversorgungseinrichtung (20, 21, 22) mittels des zumindest einen radial vorstehenden Verlängerungsbereichs (43) auf den zumindest einen ringförmigen Bereich (48) übertragen werden können.

7. System (40) nach einem der Ansprüche 1 bis 6,
wobei der Felgeneinsatz (42) zumindest einen Drucksensor (53) aufweist, der mit einem an der Fahrzeugfelge (2) angebrachten Reifen in Fluidverbindung ist oder gebracht werden kann; und/oder
wobei der Felgeneinsatz (42) zumindest ein druckgesteuertes Auslassventil aufweist, das einerseits mit einem an der Fahrzeugfelge (2) angebrachten Reifen in Fluidverbindung ist oder gebracht werden kann und andererseits mittels des zumindest einen ringförmigen Bereichs (48, 49) mit der Radnaben-Druckmittelversorgungseinrichtung (20, 21, 22) in Fluidverbindung ist oder gebracht werden kann; und/oder der Felgeneinsatz (42) zumindest ein Nachfüllventil (52) aufweist, das mit einem an der Fahrzeugfelge (2) angebrachten Reifen in Fluidverbindung ist oder gebracht werden kann.

8. System (40) nach Anspruch 7,
wobei in dem zumindest einen radial vorstehenden Verlängerungsbereich (43) ein Druckmittelkanal (54), mit einem ersten Endbereich, der mit einem Druckmittelanschluss (45, 46) des Verlängerungsbereichs (43) in Fluidverbindung ist, und einem zweiten Endbereich, der in den zumindest einen ringförmigen Bereich (48, 49) einmündet, gebildet ist.

9. System (40) nach Anspruch 8,
wobei die Druckmittelverbindung (45, 46) des zumindest einen Verlängerungsbereichs (43) als eine Steckverbindung ausgeführt ist und so ausgebildet ist, dass sie in einer Verbindung aufnehmbar ist, die dementsprechend so ausgeführt ist, dass sie komplementär zu dieser ist, und wobei sich diese Verbindung bevorzugt durch eine Bremsscheibenkammer (5) erstreckt, die, zumindest in einigen Bereichen, zwischen der der Radnabe (1) und der Fahrzeugfelge (2) positioniert ist und in ein Leitungssystem (21) einmündet, das mit der Radnaben-Druckmittelversorgungseinrichtung (20, 21, 22) in Fluidverbindung ist oder gebracht werden kann.

10. System (40) nach einem der Ansprüche 1 bis 9,
wobei mehrere, bevorzugt insgesamt fünf, Verlängerungsbereiche (43) vorgesehen sind, die, zumindest in einigen Bereichen, radial von dem zentralen Bereich (55) vorstehen und insbesondere äquidistant zueinander positioniert sind; wobei die Verlängerungsbereiche (43) zum jeweiligen Eingreifen in eine Befestigungsbohrung (7) eines Lochkreises, der in einer Bremsscheibenkammer (5) vorgesehen ist, ausgeführt sind; und wobei die Befestigungsbohrungen (7) des Lochkreises der Bremsscheibenkammer (5) zum Befestigen der Fahrzeugfelge (2) vorgesehen sind.

11. System (40) nach einem der Ansprüche 1 bis 10,
wobei die Radnaben-Druckmittelversorgungseinrichtung (20, 21, 22) eine dezentral integrierte Druckmittelversorgungsvorrichtung aufweist oder mittels einer Druckmitteldrehdurchführung (21) mit einer bevorzugt zentralen Druckmittelversorgungsvorrichtung in Fluidverbindung ist oder gebracht werden kann.

12. System (40) nach einem der Ansprüche 1 bis 11,
wobei das System (40) als Teil eines Reifendrucksteuersystems ausgebildet ist und so ausgeführt ist, dass es separate Steuerdrücke und/oder Betriebsdrücke von der Radnaben-Druckmittelversorgungseinrichtung (20, 21, 22) auf die Fahrzeugfelge (2) überträgt.

13. System (40) nach einem der Ansprüche 1 bis 12,
das so ausgeführt ist, dass es einen Reifendruck und/oder eine Reifentemperatur erfasst und den erfassten Wert oder die erfassten Werte an eine Steuereinheit übermittelt.

14. System (40) nach einem der Ansprüche 1 bis 13,
das so ausgeführt ist, dass es einen an der Fahrzeugfelge (2) angebrachten Reifen bei Bedarf aufpumpt oder entlüftet.

## Revendications

1. Système (40) pour la transmission sous pressions de commande et/ou des pressions de travail à partir d'une alimentation en fluide sous pression de moyeu de roue (20, 21, 22), en particulier à partir d'un raccord rotatif de fluide sous pression de moyeu de roue (21), à une jante de véhicule (2) montée sur le moyeu de roue (1), dans lequel le système (40) a une partie de réception (41), qui a une zone centrale (55) avec une ouverture centrale (44) et au moins une zone d'extension (43) faisant saillie radialement à partir de la zone centrale (55), au moins dans certaines zones, et la partie de réception (41) peut être reliée au moyeu de roue (1) au moyen de l'au moins une zone d'extension faisant saillie radialement (43), de préférence de manière amovible ;
le système (40) a également un insert de jante (42) pour l'enregistrement ou l'exportation des pressions de commande et/ou des pressions de travail, qui peuvent être logées, au moins dans certaines zones, par l'ouverture (44) de la zone centrale (55), et des pressions de commande et/ou des pressions de travail peuvent être transmises à partir de l'alimentation en fluide sous pression de moyeu de roue (20, 21, 22) via la partie de réception (41) à l'insert de jante (41).

2. Système (40) selon la revendication 1,
dans lequel l'ouverture (44) de la zone centrale (55) est réalisée, au moins dans certaines zones, pour recevoir un insert de jante (42) agencé dans l'alésage central d'une jante de véhicule (2).

3. Système (40) selon la revendication 1 ou 2,
dans lequel l'insert de jante (42) a une configuration qui est adaptée à l'alésage central d'une jante de véhicule (2) de sorte que l'insert de jante (42) peut être logé, au moins dans certaines zones, dans l'alésage central de la jante de véhicule (2).

4. Système (40) selon la revendication 1 à 3,
dans lequel l'ouverture (44) de la zone centrale (55) et l'insert de jante (42) qui est logé, au moins dans certaines zones, par l'ouverture (44) forment ensemble un raccord rotatif pour la transmission sous pressions de commande et/ou sous pressions de travail à partir de l'alimentation en fluide sous pression de moyeu de roue (20, 21, 22) à l'insert de jante (42) qui est logé, au moins dans certaines zones, par l'ouverture (44) quelle que soit la position de rotation de l'insert de jante (42) par rapport à l'ouverture (44).

5. Système (40) selon la revendication 1 à 4,
dans lequel l'insert de jante (42) est réalisé, au moins dans certaines zones, d'une manière symétrique en rotation et en particulier cylindrique circulaire et/ou tronconique et a une surface circonférentielle externe ;
dans la surface circonférentielle externe, au moins une zone annulaire (49), en particulier une gorge annulaire, est formée, qui fait de préférence toute la périphérie et est réalisée de sorte que, dans un état où l'insert de jante (42) est logé, au moins dans certaines zones, par l'ouverture (44) de la zone centrale (55), des pressions de commande et/ou des pressions de travail peuvent être transmises à partir de l'alimentation en fluide sous pression de moyeu (20, 21, 22) à l'au moins une zone annulaire (49) au moyen de l'au moins une zone d'extension faisant saillie radialement (43).

6. Système (40) selon l'une quelconque des revendications 1 à 5,
dans lequel l'ouverture (44), au moins dans certaines zones, est symétrique en rotation et en particulier cylindrique circulaire et/ou tronconique et présente une surface circonférentielle interne ; dans la surface circonférentielle interne, au moins une zone annulaire (48), en particulier une gorge annulaire, est formée, qui s'étend de préférence sur toute la périphérie et est réalisée de sorte que des pressions de commande et/ou des pressions de travail peuvent être transmises à partir de l'alimentation en fluide sous pression (20) du moyeu 21, 22) à l'au moins une zone annulaire (48) au moyen de l'au moins une zone d'extension faisant saillie radialement (43) .

7. Système (40) selon l'une quelconque des revendications 1 à 6,
dans lequel l'insert de jante (42) a au moins un capteur sous pression (53) qui est en ou peut être mis en liaison fluidique avec un pneu monté sur la jante de véhicule (2) ; et/ou l'insert de jante (42) a au moins une valve de sortie commandée par pression, qui d'une part est en ou peut être mise en liaison fluidique avec un pneu monté sur la jante de véhicule (2) et d'autre part est en ou peut être mise en liaison fluidique avec l'alimentation en fluide sous pression de moyeu de roue (20, 21, 22) au moyen de l'au moins une zone annulaire (48, 49) ; et/ou
l'insert de jante (42) a au moins une valve de remplissage (52) qui est en ou peut être mise en liaison fluidique avec un pneu monté sur la jante de véhicule (2).

8. Système (40) selon la revendication 7,
dans lequel, dans l'au moins une zone d'extension faisant saillie radialement (43), un canal de fluide sous pression (54) est formé, avec une première zone d'extrémité, qui est en liaison fluidique avec une liaison en fluide sous pression (45, 46) de la zone d'extension (43), et une deuxième zone d'extrémité, qui débouche dans l'au moins une zone annulaire (48, 49).

9. Système (40) selon la revendication 8,
dans lequel la liaison en fluide sous pression (45, 46) de l'au moins une zone d'extension (43) est réalisée sous forme de liaison enfichable et est conçue pour pouvoir être logée dans une liaison complémentaire correspondante et cette liaison s'étendant de préférence à travers une chambre de disque de frein (5) qui est positionnée, au moins dans certaines zones, entre le moyeu de roue (1) et la jante de véhicule (2) et débouche dans un système de conduite (21) qui est en ou peut être mis en liaison fluidique avec l'alimentation en fluide sous pression de moyeu de roue (20, 21, 22).

10. Système (40) selon l'une des revendications 1 à 9,
dans lequel plusieurs, de préférence au total cinq, zones d'extension (43) sont fournies, faisant saillie radialement, au moins dans certaines zones, à partir de la zone centrale (55) et en particulier positionnés de manière équidistante les unes des autres ; les zones d'extension (43) sont réalisées pour s'engager respectivement dans un alésage de fixation (7) d'un cercle de trous fournis dans une chambre de disque de frein (5) ; et les alésages de fixation (7) du cercle de trous de la chambre de disque de frein (5) sont fournis pour la fixation de la jante de véhicule (2).

11. Système (40) selon l'une des revendications 1 à 10,
dans lequel l'alimentation en fluide sous pression de moyeu de roue (20, 21, 22) a un dispositif d'alimentation en fluide sous pression intégré décentralisé ou est en ou peut être mis en liaison fluidique avec un dispositif d'alimentation en fluide sous pression de préférence central au moyen d'un raccord rotatif de fluide sous pression (21).

12. Système (40) selon l'une des revendications 1 à 11,
dans lequel le système (40) est conçu pour faire partie d'un système de commande de pression de pneu et est réalisé pour transmettre des pressions de commande et/ou des pressions de travail séparées à partir de l'alimentation en fluide sous pression de moyeu de roue (20, 21, 22) à la jante de véhicule (2).

13. Système (40) selon l'une des revendications 1 à 12,
qui est réalisé pour détecter une pression de pneu et/ou une température de pneu et pour transmettre la valeur détectée ou les valeurs détectées à une unité de commande.

14. Système (40) selon l'une des revendications 1 à 13,
qui est réalisé pour gonfler ou dégonfler, si nécessaire, un pneu qui est monté sur la jante (2) du véhicule.
